## Europäisches Patentamt
## European Patent Office
## Office européen des brevets

(19)

(11) Numéro de publication: **0 009 759**
**B1**

(12)
# FASCICULE DE BREVET EUROPEEN

(45) Date de publication du fascicule du brevet: **27.01.82**

(51) Int. Cl.³: **F 16 H 5/40, B 60 K 41/06**

(21) Numéro de dépôt: **79103644.5**

(22) Date de dépôt: **25.09.79**

---

(54) **Dispositif de commutation séquentielle pour la commande d'une transmission automatique.**

---

(30) Priorité: **04.10.78 FR 7828436**

(43) Date de publication de la demande:
**16.04.80 Bulletin 80/8**

(45) Mention de la délivrance du brevet:
**27.01.82 Bulletin 82/4**

(84) Etats contractants désignés:
**BE DÉ GB IT NL SE**

(56) Documents cités:
**FR - A - 2 119 344**
**FR - A - 2 227 466**
**FR - A - 2 307 197**
**FR - A - 2 376 346**
**US - A - 3 938 409**

(73) Titulaire: **REGIE NATIONALE DES USINES RENAULT**
**Boite postale 103 8-10 avenue Emile Zola**
**F-92109 Boulogne-Billancourt (FR)**

(72) Inventeur: **Pannier, Gérard**
**18, Rue Laennec**
**F-78390 Bois-d'Arcy (FR)**

(74) Mandataire: **Casalonga, Alain et al,**
**Bureau D.A. Casalonga Lilienstrasse 77**
**D-8000 München 80 (DE)**

---

Courier Press, Leamington Spa, England.

Dispositif de commutation séquentielle pour la commande d'une transmission automatique

La présente invention a pour objet un dispositif de commutation séquentielle des deux électrovannes pilotant un dispositif hydraulique de commande d'une transmission automatique.

Dans le brevet français 1.528.877 on a déjà décrit une telle transmission automatique comportant trois rapports de marche avant à passage sous couple, amorti par un convertisseur hydrocinétique de couple et une marche arrière; la boîte de vitesses qui comprend un train d'engrenages épicycloïdal est actionnée par deux embrayages et deux freins à commande hydraulique. La commande de ces embrayages et de ces freins se fait par l'intermédiaire d'un ensemble hydraulique piloté par deux électrovannes afin d'alimenter sélectivement les deux embrayages et les deux freins pour l'obtention des différents rapports de la transmission. L'alimentation sélective desdites électrovannes tient compte d'informations concernant la marche du véhicule équipé de la transmission. A cet ensemble hydraulique est associé un dispositif électronique appelé gouverneur-comparateur décrit par exemple dans le brevet français 1.453.300, qui délivre des signaux correspondants au seuil de passage du premier au deuxième rapport de marche avant et au seuil de passage du deuxième au troisième rapport de marche avant. De plus, ce dispositif électronique fournit un signal qui est fonction de la position de la pédale d'accélérateur donnant ainsi une information sur la charge du moteur d'entraînement du véhicule. Enfin, le dispositif fournit également un signal correspondant à la vitesse du véhicule.

Le gouverneur-comparateur électronique tient compte de ces différentes informations ainsi que de la position du levier de sélection manoeuvré par le conducteur et d'un signal dit de "rétro-contact" ou "kick-down" placé en fin de course de l'accélérateur et permettant de forcer dans une certaine plage de vitesses admissible de rétrogradation des rapports, pour fournir aux deux électrovannes de commande du circuit hydraulique pilotant la boîte de vitesses des signaux susceptibles d'ouvrir ou de fermer ces électrovannes.

Dans une telle transmission à trois rapports de marche avant, l'utilisation de deux électrovannes de pilotage ne fait usage habituellement que de trois états possibles de ces électrovannes. Dans la demande de brevet européen 0009759 déposée conjointement et ayant pour titre "Dispositif de commande d'une transmission automatique et procédé de mise en oeuvre", on a décrit un dispositif de commande qui permet l'utilisation du quatrième état possible de ces électrovannes pour définir un état transitoire permettant d'assurer un passage entre le troisième et le deuxième rapport de marche avant de la boîte de vitesses qui se fasse sans à-coup. La durée totale de ce passage transitoire, en particulier pour rétrograder du troisième au deuxième rapport, doit selon cette demande de brevet, être déterminée en fonction de la vitesse du véhicule et varier de façon inversement proportionnelle à cette dernière. Le passage du troisième au deuxième rapport de vitesse s'obtient en vidangeant rapidement un embrayage nécessaire pour le troisième rapport et an alimentant un frein nécessaire pour le deuxième rapport. Le passage se fait suivant deux régimes consécutifs. Selon le premier, la capacité hydraulique du frein est rapidement alimentée, pendant le quatrième état transitoire des deux électrovannes. Selon le deuxième régime, le même frein est alimenté lentement pendant l'état permanent qui suit l'état transistoire précité. Lorsque le conducteur a le pied sur l'accélérateur et si le véhicule possède une vitesse importante il est nécessaire que le temps de passage entre le troisième et le deuxième rapport de la transmission soit suffisamment long pour permettre au moteur d'entraînement du véhicule d'atteindre une vitesse de synchronisme relativement élevée. Dans la demande de brevet européen précitée, l'obtention d'un tel passage de longue durée peut être obtenu en assurant une faible durée à l'état transitoire du dispositif de commande hydraulique pendant lequel le remplissage du frein nécessaire pour l'établissement du deuxième rapport de vitesse se fait rapidement.

Lorsque le conducteur a toujours le pied sur l'accélérateur mais que la vitesse du véhicule est faible, il suffit au contraire d'un temps de passage entre la troisième et la deuxième vitesse relativement court, ce temps étant suffisant pour permettre au moteur de parvenir à la vitesse de synchronisme qui cette fois est faible. Selon la demande de brevet européen précitée il convient alors de maintenir l'état transitoire du dispositif de commande hydraulique pendant une durée plus importante. Cet état transitoire correspondant en effet à un remplissage rapide du frein hydraulique nécessaire pour le deuxième rapport, le temps de passage total s'établit finalement à une durée plus faible.

Une troisième situation doit également être considérée dans le cas où le conducteur a le pied levé c'est-à-dire n'agit pas sur l'accélérateur, le véhicule possédant une faible vitesse. Dans ce cas, la vitesse de synchronisme du moteur est faible. Toutefois, dans ce cas la montée en régime du moteur ne peut être obtenue que par l'énergie cinétique du véhicule qui entraîne alors le moteur par l'intermédiaire de la boîte de vitesses dès le début du passage. Compte tenu de cette situation il convient de laisser au moteur une durée relativement importante pour atteindre la vitesse de synchronisme. Dans ce cas il conviendra donc à nouveau d'assurer une faible durée de l'état transitoire du dispositif de commande hydraulique.

La présente invention a pour objet de fournir aux deux électrovannes de pilotage du dispositif de commande hydraulique d'une telle transmission des signaux, en particulier pour le passage du troisième au deuxième rapport de marche avant et vice versa, qui permettent l'obtention d'une durée convenable de l'état transitoire du dispositif de commande qui correspond au quatrième état des deux électrovannes.

Dans le cas du passage du deuxième rapport au troisième rapport il suffit d'assurer une durée constante et faible pour cet état transitoire. Au contraire, pour le passage du troisième au deuxième rapport de vitesse il convient, comme il vient d'être explicité, de fournir aux électrovannes des signaux de commande convenablement temporisés pour assurer une durée variabde du temps de passage et de l'état transitoire du dispositif de commande hydraulique.

Le dispositif de commutation séquentielle selon l'invention agit sur deux électrovannes pilotant un dispositif de commande hydraulique d'une transmission automatique à troise rapports de marche avant à passage sous couple et une marche arrière à partir de signaux dépendant de la marche du véhicule équipé de la transmission. Ces signaux comprennent en particulier deux signaux correspondant respectivement au seuil de passage du premier au deuxième rapport de marche avant et au seuil de passage du deuxième au troisième rapport de marche avant, un signal fonction de la position de la pédale d'accélérateur et un signal de fréquence, fonction de la vitesse du véhicule. Selon l'invention le dispositif de commutation comprend un premier block de traitement des deux signaux de seuil de passage des rapports de marche avant fournissant un premier signal de commande pour la première électrovanne avec une première temporisation constante. Ce premier signal assure une durée relativement courte et constante quelle que soit la marche du véhicule pour l'état transitoire du dispositif de commande hydraulique lors du passage du deuxième rapport au troisième rapport de marche avant.

Le dispositif de l'invention comprend en outre un deuxième bloc de traitement des deux signaux de seuil de passage des rapports recevant également le signal fonction de la pédale d'accélérateur et le signal de fréquence fonction de la vitesse du véhicule. Ce deuxième bloc de traitement fournit un deuxième signal de commande pour la deuxième électrovanne avec une deuxième temporisation dont la durée est variable en fonction des signaux dépendent respectivement de la position de la pédale d'accélérateur et de la vitesse du véhicule. Cette deuxième temporisation permet d'assurer la durée variable de l'état transitoire du dispositif de commande hydraulique pour le passage du troisième rapport au deuxième rapport de marche avant en laissant au moteur d'entraînement du vèhicule le temps d'atteindre la vitesse de synchronisme convenable.

L'invention sera mieux comprise à l-aide de la description détaillée de deux modes de réalisation pris comme exemples nullement limitatifs et illustrés par les dessins annexés, sur lesquels:

la fig. 1 montre schématiquement l'ensemble des organes essentiels de la commande d'une transmission automatique à trois rapports de marche avant et une marche arrière comportant un train d'engrenages épicycloïdal actionné par deux embrayages et deux freins à commande hydraulique;

la fig. 2 est un tableau synoptique montrant selon la position du levier de sélection et la rapport engagé, l'état des deux électrovannes de commande ainsi que l'état qui en résulte pour les deux embrayages et les deux freins de la transmission;

la fig. 3 est un schéma simplifié du dispositif de l'invention;

la fig. 4 montre les formes d'onde aux entrées et aux sorties du dispositif de l'invention;

la fig. 5 est un schéma synoptique d'un premier mode de réalisation d'un circuit de commande pouvant être utilisé pour le dispositif de l'invention;

la fig. 6 montre à titre d'exemple un schéma électronique détaillé d'un circuit pouvant réaliser les fonctions illustrées sur la fig. 5;

la fig. 7 montre l'évolution dans le temps des formes d'onde obtenues en différents points du circuit de la fig. 6 en fonction des signaux d'entrée pour le premier signal de sortie;

les fig. 8 et 9 montrent l'évolution dans le temps des formes d'onde obtenues en divers points du circuit illustré sur la fig. 6 en fonction des signaux d'entrée pour le deuxième signal de sortie selon la fréquence du signal d'entrée correspondant à la vitesse du véhicule et selon la valeur du signal fonction de la position de la pédale d'accélérateur;

la fig. 10 est une courbe illustrant la temporisation obtenue pour le deuxième signal de sortie en fonction de la fréquence d'entrée correspondant à la vitesse du vèhicule pour deux valeurs du signal fonction de la position de la pédale d'accélérateur;

la fig. 11 est un schéma synoptique d'un deuxième mode de réalisation d'un circuit de commande pouvant être utilisé dans le dispositif de l'invention;

la fig. 12 est un exemple de schéma électronique détaillé d'un circuit pouvant réaliser les fonctions illustrées sur la fig. 11;

les fig. 13 et 14 montrent l'évolution dans le temps des formes d'onde obtenues en divers points du circuit électronique de la fig. 12 en fonction des signaux d'entrée montrant le deuxième signal de sortie selon la fréquence du signal d'entrée correspondant à la vitesse du véhicule et selon la valeur du signal fonction de la position de la pédale d'accélérateur; et

la fig. 15 est une courbe illustrant les trois niveaux de temporisation obtenus par le dispositif illustré sur les fig. 11 à 14 en fonction de la fréquence du signal d'entrée correspondant à la vitesse du véhicule pour deux valeurs du signal fonction de la position de la pédale d'accélérateur.

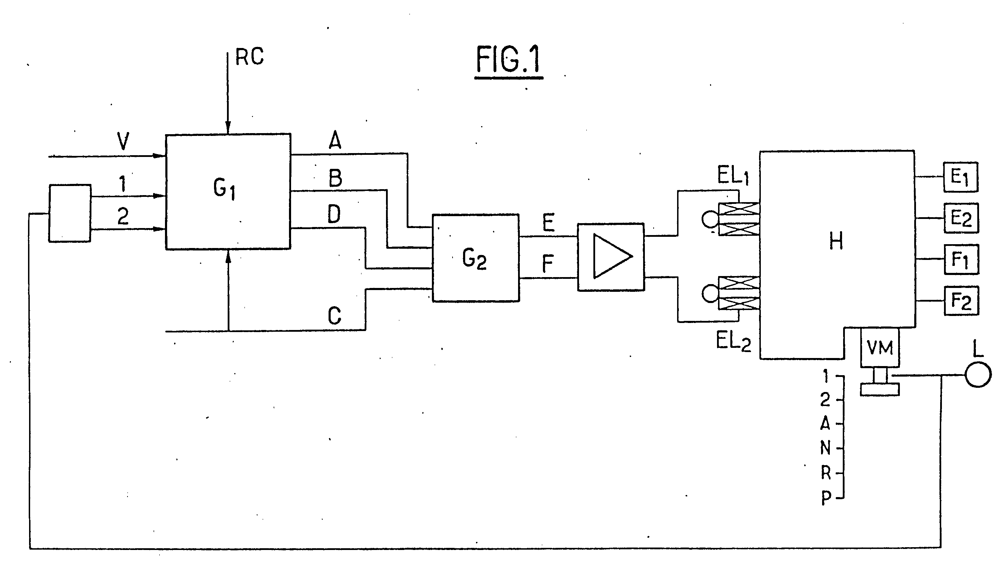

Tels qu'ils sont représentés sur la fig. 1 les éléments de la commande de la transmission automatique comprennent un circuit hydraulique H susceptible d'alimenter en fluide hydraulique les deux embrayages E1, E2 et les deux freins F1 et F2 qui actionnent le train d'engrenages épicycloïdal de la transmission Le circuit hydraulique H est commandé d'une part par l'intermédiaire d'une vanne manuelle VM reliée mécaniquement au levier de sélection de vitesses L et d'autre part au moyen de deux électrovannes $EL_1$ et $EL_2$ Un dispositif gouverneur électronique $G_1$ capte la vitesse du véhicule V et reçoit en outre des informations sur l'état du levier de sélection dans les positions 1 et 2 correspondant respectivement à la "première imposée" et la "troisième interdite" (deuxième imposée) et sur l'état du rétro-contact RC placé en fin de course de la pédale d'accélérateur. Le gouverneur $G_1$ émet un signal A lorsque la vitesse du véhicule impose le passage du premier rapport de la transmission au deuxième rapport et un signal B lorsque la transmission doit passer du deuxième au troisième rapport ainsi qu'un signal D dont la fréquence correspond à la vitesse V du véhicule. Un signal C, fonction le la position de la pédale d'accélérateur est en outre fourni au gouverneur $G_1$. Les quatre signaux A, B, C et D sont introduits dans le dispositif $G_2$ de commutation séquentielle de la présente invention qui émet les signaux de sortie E et F lesquels, après amplification, sont appliqués directement aux électrovannes $EL_1$ et $EL_2$.

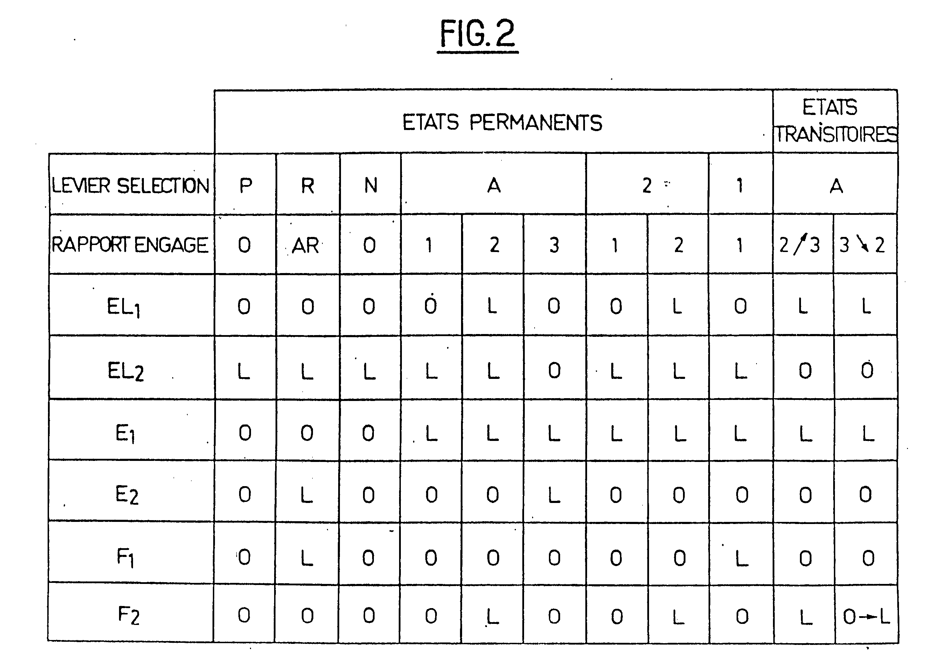

On se reportera à la fig. 2 pour connaître les états respectifs des deux électrovannes $EL_1$ et $EL_2$ selon la position du levier de sélection et selon la rapport engagé de la transmission.

Le levier de sélection L peut prendre six positions:

— position "première imposée" repérée 1;
— position "troisième interdite" (ou deuxième imposée) repérée 2;
— position "automatique" repérée A;
— position "neutre" repérée N;
— position "marche arrière" repérée R;
— et position parc" (ou arrêt bloqué) repérée P.

La référence "O" signifie que l'électrovanne correspondante n'est pas excitée tandis que la référence "L" signifie que l'électrovanne correspondante est excitée. On notera que les trois rapports de marche avant, le rapport de marche arrière et la position de point mort peuvent être obtenus au moyen de trois états des deux électrovannes $EL_1$ et $EL_2$. Les états transitoires correspondants au passage entre le deuxième et la troisième rapport et vice versa sont obtenus au moyen du quatrième état possible des deux électrovannes.

La fig. 2 montre en outre l'état des deux embrayages ($E_1$, $E_2$) et des deux freins ($F_1$, $F_2$) de la transmission pour chaque configuration des deux électrovannes ($EL_1$, $EL_2$). Le repère "O" signifie que l'élément correspondant n'est pas alimenté en fluide hydraulique et n'est donc pas serré tandis que le repère "L" signifie que l'élément correspondant est alimenté en fluide hydraulique et se trouve serré.

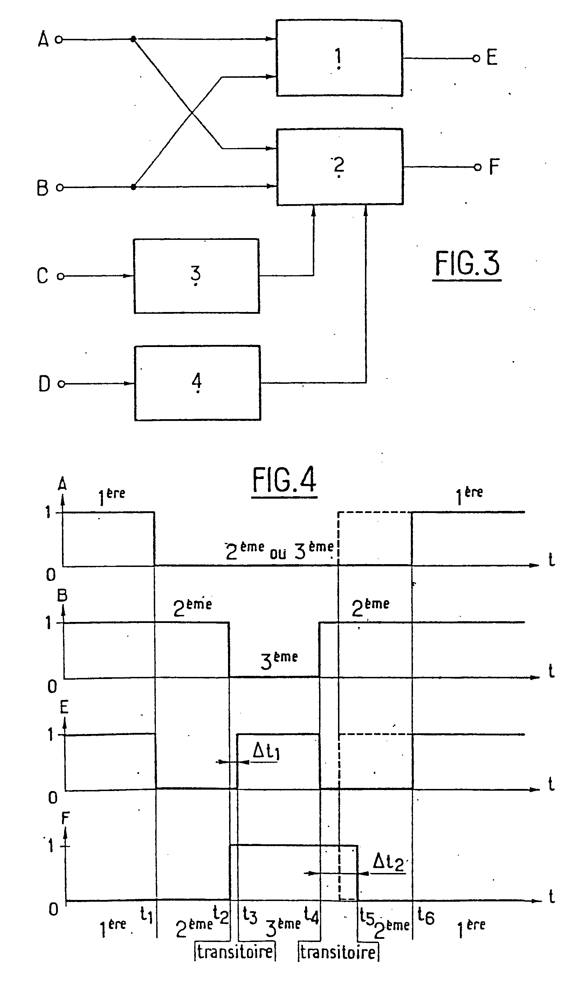

Le dispositif de commutation séquentielle dont le schéma simplifié est représenté sur la fig. 3 permet de définir les signaux E et F de commande des deux électrovannes $EL_1$ et $EL_2$. On notera que ces signaux peuvent être soit haut soit bas, le signal bas correspondant à l'état excité de l'électrovanne associée et le signal haut à l'état désexcité.

Les signaux A, B, E et F ne peuvent prendre que deux niveaux correspondant respectivement à la valeur "O" proche de la tension nulle et à la valeur "1" proche d'une tension de référence avec des fronts de transition du niveau bas vers le niveau haut et/ou du niveau haut vers le niveau bas, très courts par rapport à la période d'évolution des signaux considérés. Le signal C est une tension analogique correspondant à la position de la pédale d'accélérateur et dont l'amplitude est variable dans le temps. Le signal D est également une tension analogique dont la fréquence, fonction de la vitesse du véhicule, est variable dans le temps. Comme on peut le voir sur la fig. 3, les signaux d'entrée A et B sont transformés par l'intermédiaire d'un premier bloc de traitement 1 et d'un deuxième bloc de traitement 2 qui reçoivent chacun les deux signaux A et B. Le premier bloc de traitement 1 fournit le signal de sortie E destiné à commander la première électrovanne $EL_1$ visible sur la fig. 1 avec une temporisation constante ($\Delta t_1$). Le deuxième bloc de traitement 2 reçoit non seulement les signaux A et B mais également la sortie d'un détecteur de niveau de tension 3 alimenté par le signal C et la sortie d'un détecteur de fréquence 4 alimenté par le signal D. Le bloc de traitement 2 élabore finalement un signal de sortie F destiné à commander la deuxième électrovanne $EL_2$ avec une temporisation variable ($\Delta t_2$) dont la durée dépend des signaux C et D.

En se reportant à la fig. 4 on peut observer l'évolution en fonction du temps des tensions des différents signaux. Le signal E est au niveau haut lorsque les signaux A et B sont tous deux hauts; le signal E est au niveau bas lorsque le signal A est au niveau bas et le signal B au niveau haut. Le signal E reste au niveau bas pendant un temps $\Delta t_1$ constant compté à partir du front de descente (niveau haut vers le niveau bas) du signal B lorsque le signal A est au niveau bas. Le signal E passe rapidement à la valeur haute pendant que les signaux A et B restent au niveau bas.

Le signal F est au niveau haut quand le signal B est au niveau bas. Il reste au niveau haut pendant un temps $\Delta t_2$ compté à partir du front de montée (niveau bas vers le niveau haut) du signal B. Le temps $\Delta t_2$ est variable avec la tension du signal C qui agit par l'intermédiaire du détecteur de niveau de tension 3 et avec la fréquence du signal D qui agit par l'intermédiaire du détecteur de fréquence 4 visibles sur la fig. 3. Le signal F passe rapidement à la valeur basse pendant que le signal A est bas et que le signal B est haut. Le niveau haut du signal A impose le niveau bas du signal F comme on peut le voir sur la courbe en tirets.

On notera que le passage du signal A du niveau haut au niveau bas correspond au passage du premier rapport de la transmission au deuxième rapport. Le passage du signal B due niveau haut au niveau bas correspond au passage du deuxième rapport au troisième rapport. Dans ces conditions de 0 à $t_1$ sur la fig. 4, la transmission se trouve sur le premier rapport de vitesse; du temps $t_1$ au temps $t_2$ le dispositif de commande hydraulique se trouve dans une configuration correspondant à l'état permanent du deuxième rapport de vitesse. Pendant le temps $\Delta t_1$ c'est-à-dire de $t_2$ à $t_3$ lors de la transition du deuxième au troisième rapport de vitesse, le dispositif de commande hydraulique piloté par les deux électrovannes $EL_1$ et $EL_2$ dans leur quatrième état se trouve dans une configuration correspondant à l'état transitoire. Du temps $t_3$ jusqu'au temps $t_4$ le dispositif de commande hydraulique se trouve dans une configuration correspondant au troisième rapport de vitesse. Pendant la durée $\Delta t_2$ c'est-à-dire depuis $t_4$ jusqu'à $t_5$ les deux électrovannes $EL_1$ et $EL_2$ se trouvent dans le quatrième état correspondant à l'état transitoire du passage de la troisième vitesse à la deuxième vitesse. Du temps $t_5$ au temps $t_6$ on se trouve à nouveau en deuxième vitesse et enfin au-delà de $t_6$ la transmission est à nouveau dans la configuration de la première vitesse. On notera en outre que le signal B ne peut être bas que lorsque le signal A est déjà bas, le passage de la deuxième à la troisième vitesse ne pouvant en effet se faire que si le passage de la première à la deuxième vitesse est déjà fait. De plus, le niveau bas du signal B est toujours plus long que le temps de retard constant $\Delta t_1$ lequel est en général inférieur à 20 millisecondes.

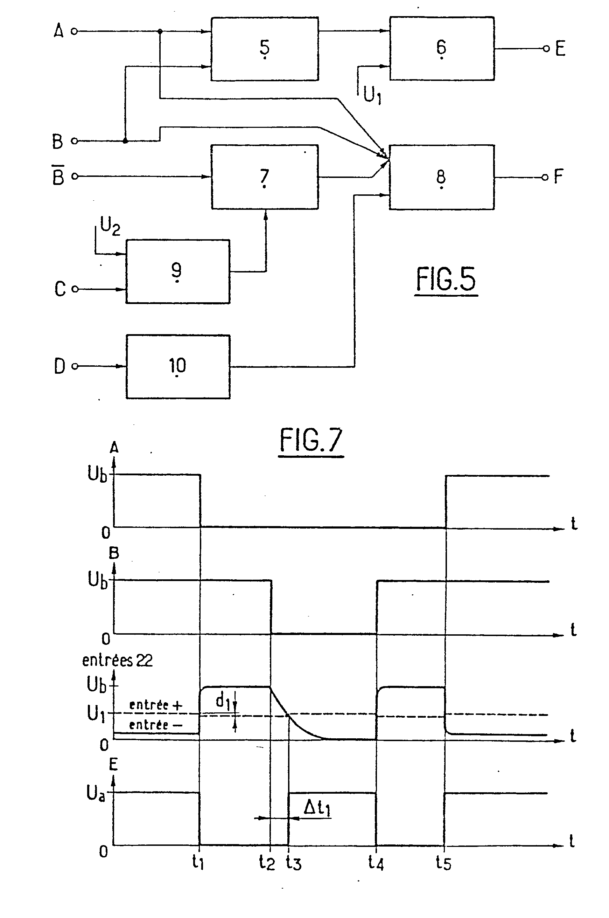

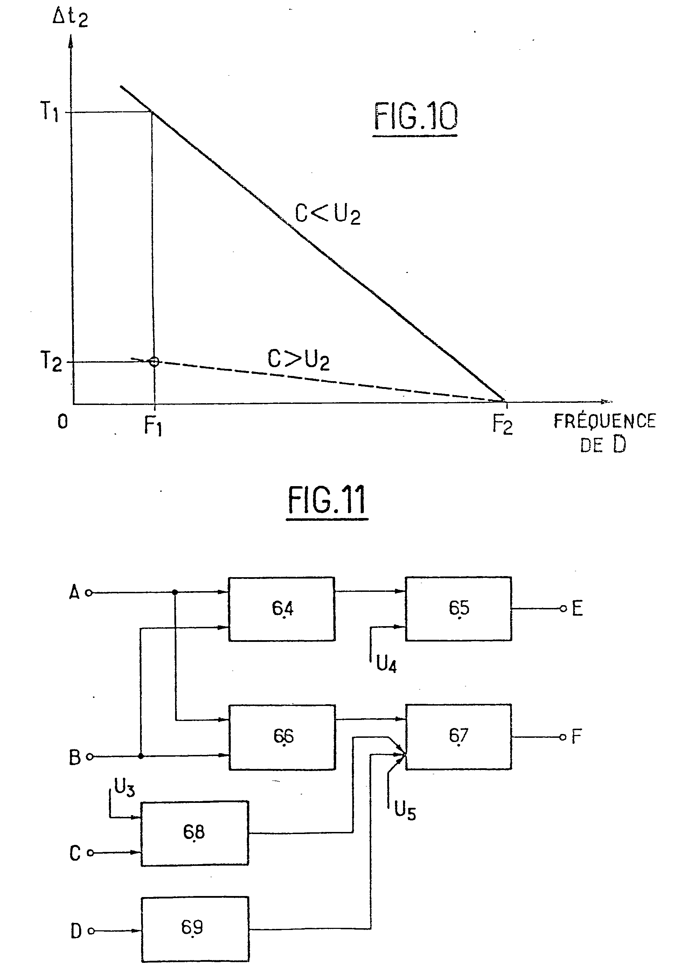

Dans le mode de réalisation de la fig. 5, le signal E est obtenu par un générateur de rampe 5 recevant les signaux d'entrée A et B et un comparateur de tension 6 à seuil fixe $U_1$ qui réalise la combinaison logique des signaux d'entrée A et B du block de traitement 1 de la fig. 3 et assure la fonction de temporisation $\Delta t_1$. Le signal F est obtenu par un générateur de rampe linéaire 7 recevant le complément du signal B (soit $\overline{B}$) et la commande de pente provenant du comparateur de tension 9 à seuil fixe $U_2$ qui détecte le niveau de tension du signal C et par un comparateur de tension à seuil variable 8 recevant le signal de sortie du générateur de rampe 7, le signal A, le signal B et la tension de seuil variable en fonction de la fréquence du signal D qui provient du convertisseur fréquence/tension 10. Cette disposition permet de réaliser les fonctions du bloc de traitement 2 de la fig. 3 c'est-à-dire la combinaison logique des signaux d'entrée A et B en fournissant la temporisation $\Delta t_2$ donnant un temps variable de manière discontinue avec le niveau de tension du signal C et de manière continue avec la fréquence du signal D comme représenté sur la courbe de la fig. 10.

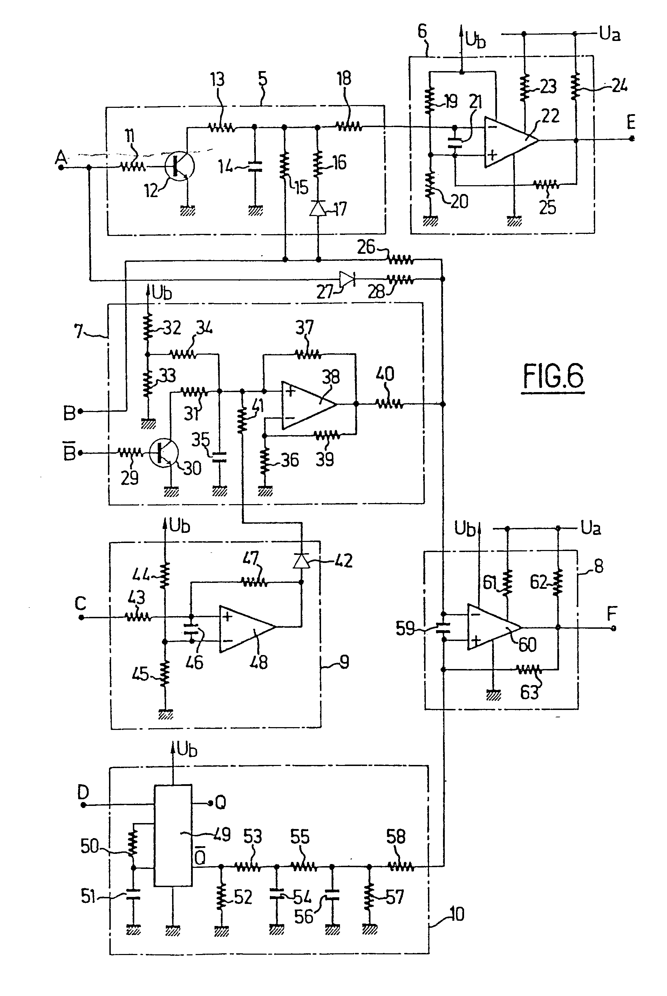

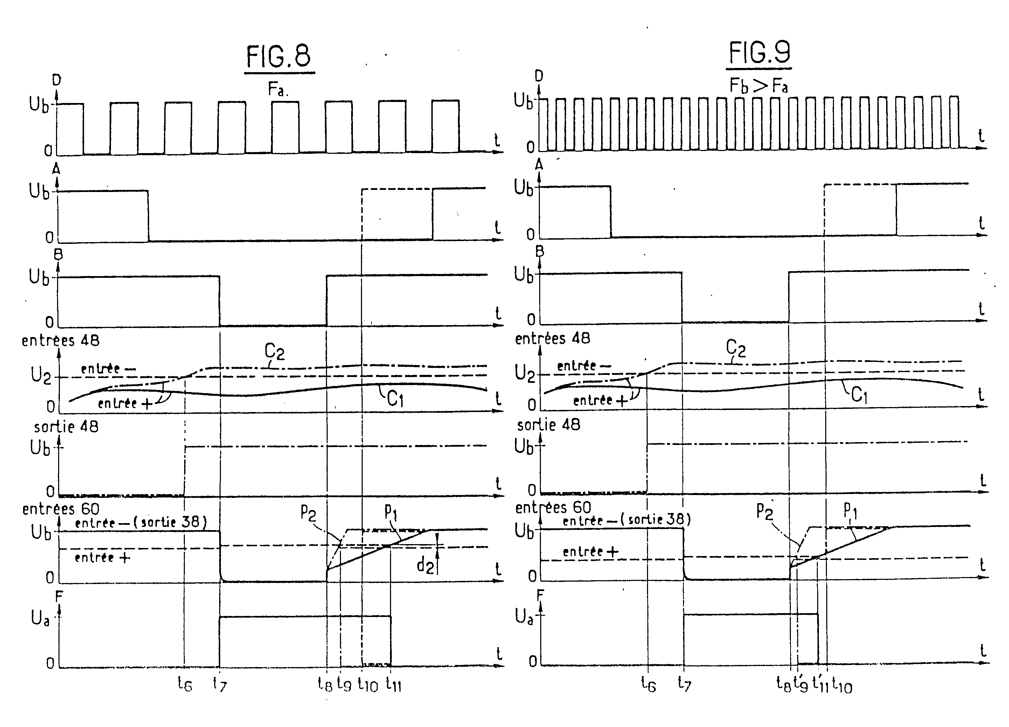

Dans le mode de réalisation de la fig. 6 illustré par les formes d'onde des fig. 7, 8 et 9, le générateur de rampe 5 de la fig. 5 est réalisé au moyen du condensateur 14 qui peut se charger ou se décharger suivant des lois exponentielles à différentes constantes de temps par les voies suivantes.

La première voie comprend la résistance 13 en série avec le collecteur de transistor NPN 12 dont l'émetteur est relié au condensateur 14 par l'intermédiaire de la masse du montage. Cette première voie permet de décharger rapidement le condensateur 14 lorsque le signal A appliqué à la base due transistor 12 à travers une résistance 11 devient haut en prenant la valeur Ub et de le maintenir déchargé tant que le signal A reste haut. Cette configuration correspond au temps compris entre 0 et $t_1$ et aux temps supérieurs à $t_5$ sur la fig. 7. Cette première voie est sans influence sur l'état de charge du condensateur 14 lorsque le signal A est bas. Ceci correspond au temps compris entre $t_1$ et $t_5$ sur la fig. 7.

Une deuxième voie comprend la résistance 15 placée en parallèle avec la branche constituée par la résistance 16 en série avec la diode 17. Cette voie connectée au signal B permet de charger rapidement le condensateur 14 par la résistance 16 et la diode 17 lorsque le signal B devient haut ($U_b$) et de le maintenir chargé tant que le signal B est haut et que la voie de décharge constituée par la résistance 13 et le transistor 12 est bloquée par la présence d'un signal A au niveau bas. Ceci correspond au temps compris entre $t_1$ et $t_2$ et au temps compris entre $t_4$ et $t_5$ sur la fig. 7. Cette voie sert également à décharger lentement le condensateur 14 par la résistance 15 lorsque le signal B devient bas et de la maintenir déchargé tant que le signal B reste bas. Ceci correspond au temps compris entre $t_2$ et $t_4$ sur la fig. 7. La résistance 13 et le transistor 12 sont alors sans effet et le niveau du signal A n'a plus d'influence sur l'état de charge du condensateur 14.

Le comparateur de tension à seuil fixe 6 de la fig. 5 est réalisé au moyen d'un amplificateur opérationnel 22 qui dans l'exemple illustré possède un étage de sortie réalisé avec un transistor NPN à collecteur ouvert alimenté par la tension $U_a$ à travers les résistances 23 et 24. Cette particularité permet d'obtenir une valeur du niveau haut du signal E différente de la tension $U_b$ commune au niveau haut des autres signaux. En particulier la tension $U_a$ du signal E peut être établie à une niveau plus élevé afin de permettre une alimentation convenable des deux électrovannes $EL_1$ et $EL_2$ à travers un amplificateur de puissance suiveur de tension. Au contraire, la tension $U_b$ à un niveau inférieur et convenablement stabilisée, alimente les autres éléments du circuit.

L'amplificateur opérationnel 22 est monté en comparateur de tension. Le condensateur 21 placé entre ses entrées positive (+) et négative (−) permet de supprimer les comparaisons indésirables dues à la présence accidentelle d'impulsions parasites très brèves sur les entrées (+) et (−). Le point commun des résistances 19 et 20 qui forment un pont diviseur de tension entre la tension $U_b$ et la masse du montage est relié à l'entrée (+) de l'amplificateur opérationnel 22 et à une résistance 25 de réaction dont l'autre extrémité est connectée à la sortie de l'amplificateur opérationnel 22 qui fournit le signal E. L'entrée (−) de l'amplificateur opérationnel 22 est reliée par l'intermédiaire d'une résistance 18 au condensateur 14 dont la tension varie suivant les signaux A et B comme décrit précédemment. Cette disposition permet d'appliquer à l'entrée (+) de l'amplificateur 22 une tension de référence qui varie légèrement dans le même sens que la tension de sa sortie produisant un décalage de la tension à l'entrée (+) favorisant son croisement avec la tension de l'entrée (−) au point de comparaison. Ce croisement est visible sur la fig. 7 et se matérialise par le décalage référencé $d_1$. On obtient ainsi un signal E qui possède des fronts de montée et de descente raides dépourvus d'oscillation parasite.

Pour résumer le fonctionnement de ce montage en se reportant à la fig. 7 on voit que le signal E est bas lorsque le niveau de l'entrée (−) illustré en trait plein est supérieur au niveau de l'entrée (+) représenté en traits interrompus. Cette situation se présente entre les temps $t_1$ et $t_3$ et entre les temps $t_4$ et $t_5$ avec création du retard $\Delta t_1$ entre les temps $t_2$ et $t_3$. Le signal E est au contraire à son niveau haut ($U_a$) lorsque le niveau de l'entrée (+) est supérieur au niveau de l'entrée (−) pour les temps inférieurs à $t_1$, compris entre $t_3$ et $t_4$ et supérieurs à $t_5$.

Le générateur de rampe linéaire 7 de la fig. 5 est réalisé dans l'exemple illustré sur la fig. 6 au moyen du condensateur 35 qui peut se charger ou se décharger suivant des lois à différentes constantes de temps par les voies suivantes:

Une première voie est constituée par la résistance 31 montée en série avec le collecteur du transistor NPN 30 dont l'émetteur est relié au condensateur 35 par l'intermédiaire de la masse du montage. Cette voie permet de décharger rapidement le condensateur 35

lorsque le signal $\overline{B}$ qui est le complément du signal B, appliqué à la base du transistor 30 à travers une résistance 29 devient haut ($U_b$) et de le maintenir déchargé taut que le signal $\overline{B}$ est haut. Cette situation se produit pour les temps compris entre $t_7$ et $t_8$ sur la fig. 8. Cette voie est sans influence sur l'état de charge du condensateur 35 lorsque le signal $\overline{B}$ est bas. Ceci se produit pour les temps inférieurs à $t_7$ ou supérieurs à $t_8$ sur la fig. 8.

Une deuxième voie comprend un générateur de courant constant réalisé au moyen de l'amplificateur opérationnel 38, de la résistance 37 de la boucle de réaction, de la résistance 39 de la boucle de contre-réaction, de la résistance d'entrée 36 entre l'entrée (−) et la masse, de la résistance d'entrée 34 entre l'entrée (+) et le point commun des résistances 32 et 33 qui forment un pont diviseur de tension entre la tension $U_b$ et la masse du montage et la résistance 41 qui relie l'entrée (+) à la sortie de l'amplificateur opérationnel 48 à travers une diode 42. Cette voie permet de charger le condensateur 35 de valeur C avec un courant constant I suivant une loi linéaire en fonction du temps $t$ de la forme:

Tension aux bornes du condensateur $35 = U_c = I/C \cdot t = k \cdot t$

Dans cette formule k est constant en fonction du temps et ne dépend que des valeurs du condensateur 35, des résistances 32, 33, 34, 36, 37, 39 et de la résistance 41 si l'état de la sortie de l'amplificateur 48 est supérieur à la tension de charge du condensateur 35 majorée de la chute de tension directe de la diode 42 à l'état passant.

Le comparateur de tension à seuil fixe 9 de la fig. 5 est réalisé au moyen de l'amplificateur opérationnel 48. Le condensateur 46 placé entre ses entrées (+) et (−) permet de supprimer les comparaisons indésirables dues à la présence accidentelle d'impulsions parasites très brèves sur les entrées (+) et (−). Le point commun des résistances 44 et 45 qui forment un point diviseur de tension entre la tension $U_b$ et la masse du montage est relié à l'entrée (−) de l'amplificateur 48. L'entrée (+) est reliée à la borne d'entrée du signal C par l'intermédiaire de la résistance 43 et à la sortie de l'amplificateur 48 par une résistance de réaction 47. Cette disposition permet d'appliquer à l'entrée (+) de l'amplificateur 48 un léger décalage de tension de même sens de variation que le signal C qui favorise son croisement au point de comparaison avec la tension de référence envoyée sur l'entrée (−). On obtient ainsi un signal de sortie de l'amplificateur 48 qui possède des fronts de montée et de descente raides dépourvus d'oscillation parasite.

Pour résumer le fonctionnement du montage décrit cidessus en se reportant à la fig. 8, la sortie de l'amplificateur 48 est à l'état bas lorsque le signal d'entrée C est inférieur à la tension de référence $U_2$ envoyée à l'entrée (−).

Dans un premier mode de fonctionnement représenté en trait plein sur la fig. 8, le signal $C_1$ appliqué sur l'entrée (+) de l'amplificateur 48 reste toujours inférieur à la tension de référence $U_2$. Dans une autre configuration représentée en traits mixtes sur la fig. 8 la tension $C_2$ devient au contraire supérieure à la tension de référence $U_2$ à partir du temps $t_6$.

La sortie à l'état bas de l'amplificateur 48 polarise dans le sens inverse la diode 42 et supprime l'influence de la tension de sortie de l'amplificateur 48 par l'intermédiaire de la résistance 41 et la diode 42 sur la valeur du courant chargeant le condensateur 35. La tension de sortie de l'amplificateur 48 n'a donc plus aucune influence sur la valeur du courant chargeant le condensateur 35. La tension de sortie de l'amplificateur 38 évolue alors en fonction du temps suivant une loi linéaire de pente $p_1$ visible sur la fig. 8 et représentée en trait plein.

Au contraire, l'amplificateur 48 délivre à sa sortie un signal haut ($U_b$) lorsque le signal C est supérieur à la tension de référence $U_2$ envoyée à l'entrée (—). Cette situation se produit pour la configuration $C_2$ représentée en traits mixtes sur la fig. 8 à partir du temps $t_8$. Dans ce cas, la sortie à l'état haut de l'amplificateur 48 polarise dans le sens direct la diode 42 et autorise l'action de la voie constituée par la résistance 41, la diode 42 et la sortie de l'amplificateur 48 sur le générateur de courant qui charge le condensateur 35. Cette influence augmente la valeur du courant de charge du condensateur 35. La tension de sortie de l'amplificateur 38 évolue donc en fonction du temps suivant une loi linéaire de pente repérée $p_2$ sur la fig. 8 plus grande que la pente $p_1$ repérée précédemment. La nouvelle courbe obtenue est représentée en traits mixtes sur la fig. 8.

Le convertisseur fréquence/tension 10 de la fig. 5 est réalisé au moyen du circuit monostable 49 qui reçoit le signal de fréquence D et fournit en sortie des créneaux de largeur constante fixée par le résistance 50 et le condensateur 51 à chaque période des signaux D. Les signaux de la sortie négative $\overline{Q}$ qui apparaissent sur la résistance 52 reliée à la masse du montage sont envoyés à une cellule de filtrage constituée par les résistances 53, 55 et 57 et par les condensateurs 54 et 56. L'utilisation de la sortie $\overline{Q}$ sur laquelle on trouve des créneaux dont la valeur basse a une durée constante permet d'obtenir aux bornes de la résistance 57 une tension quasi continue dont le niveau varie suivant une loi linéaire décroissante lorsque la fréquence des signaux D augmente. Il en résulte une composante résiduelle alternative qui reste acceptable à basse fréquence. Il y a lieu de noter que cette tension résiduelle alternative est plus faible que celle qui serait obtenue si l'on utilisait la sortie directe Q du monostable 49 pour alimenter la même cellule de filtrage.

Le comparateur de tension à seuil variable 8 de la fig. 5 est constitué par l'amplificateur opérationnel 60 qui, dans l'exemple de réalisation illustré sur la fig. 6 et pour les mêmes advantages que précédemment, est du même type que l'amplificateur opérationnel 22. L'amplificateur 60 est monté en comparateur de tension. Le condensateur 59 placé entre ses entrées (+) et (—), comme le condensateur 21 pour l'amplificateur 22, permet de supprimer les comparaisons indésirables dues à la présence accidentelle d'impulsions parasites très brèves sur les entrées (+) et (—).

L'amplificateur 60 reçoit en outre sur son entrée (+) à travers la résistance 58, la tension image de la fréquence des signaux D issue du monostable 49 et de la cellule de filtrage comme cela vient d'être expliqué. L'amplificateur 60 reçoit également sur son entrée (+) à travers la résistance de réaction 63 la tension de sortie qui fournit le signal F.

L'amplificateur 60 reçoit sur son entrée (—):

— à travers la résistance 40 la tension de sortie de l'amplificateur 38 qui évolve en fonction du temps suivant une loi linéaire croissante de pente $p_1$ ou $p_2$ suivant la valeur du signal C comparée à la tension de référence $U_2$ dans le comparateur de tension à seuil fixe 9;
— à travers la résistance 26 le signal B; et
— à travers la diode 27 en série avec la résistance 28, le signal A.

Pour résumer le fonctionnement de ce montage on se reportera aux fig. 8 et 9 qui représentent deux valeurs différentes Fa et Fb de la fréquence des signaux D. La sortie de l'amplificateur 60 qui fournit le signal F est à l'état haut ($U_a$) lorsque le niveau de tension de l'entrée (—) est inférieur au niveau de tension de l'entrée (+). Dans le cas de la fig. 8 pour la fréquence Fa du signal D on voit que la tension appliquée à l'entrée (+) de l'amplificateur 60, représentée en tirets entraîne un niveau haut du signal F à partir du temps $t_7$ jusqu'au temps $t_{11}$ dans le cas où le signal C présente la configuration $C_1$ qui produit la pente $p_1$. Dans ce cas, la durée totale de la temporisation $\Delta t_2$ est comprise entre le temps $t_8$ qui correspond au passage du signal B au niveau haut c'est-à-dire à l'ordre de passage de troisième vitesse en deuxième vitesse et le temps $t_{11}$ défini par le dispositif électronique de l'invention.

On notera que si le signal A revient à son niveau haut comme indiqué en tirets sur la fig. 8 avant l'expiration de la temporisation $\Delta t_2$, le signal F revient automatiquement à son niveau bas (tempts $t_{10}$).

Si la tension du signal C présente la configuration $C_2$, on voit sur la fig. 8 que la durée totale $\Delta t_2$ de la temporisation est inférieure et correspond au temps entre $t_8$ et $t_9$.

Dans la configuration de la fig. 9 où la fréquence Fb du signal D est plus importante, on voit que la tension de l'entrée (+) de l'amplificateur 60 illustrée en tirets est inférieure à celle de la fig. 8, ce qui entraîne une temporisation $\Delta t_2$ plus faible qui est égale soit à la durée entre les temps $t_8$ et $t'_9$ soit à la durée entre les temps $t_8$ et $t'_{11}$ selon la configuration du signal C.

Le signal F ainsi obtenu est la combinaison des signaux A et B en fonction des signaux C et D.

En pratique on fixe la tension de seuil $U_2$ de façon que la tension du signal C soit inférieure à $U_2$ lorsque le conducteur appuie sur l'accélérateur et supérieure à $U_2$ lorsqu'il a le pied levé. En conduite automatique le levier de sélection étant en position A, lorsque le conducteur appuie sur l'accélérateur, la temporisation $\Delta t_2$ définie par le dispositif de l'invention est représentée sur la fig. 10 sous la forme de la courbe en trait plein en fonction de la fréquence du signal D qui est proportionnelle à la vitesse du véhicule.

Lorsque le conducteur a le pied levé le gouverneur $G_1$ de la fig. 1 qui reçoit également le signal C dont la tension correspond alors à la position "pied levé" de la pédale d'accélérateur et une information sur la vitesse du véhicule fournit un signal B passant de la valeur basse à la valeur haute au passage du troisième rapport au deuxième rapport à la fréquence fixe $F_1$ telle que la temporisation obtenue à partir de la courbe en tirets de la fig. 10 soit $T_2$.

On obtient finalement pour la temporisation $\Delta t_2$ une courbe (en trait plein sur la fig. 10) et un point singulier pour le cas où le conducteur a le pied levé. En conduite manuelle, lorsque le levier de sélection des rapports est passé de la position A à la position 2 (troisième interdiction deuxième imposée) la valeur de la temporisation est obtenue soit sur la courbe en trait plein si le conducteur appuie sur l'accélérateur, soit sur la courbe en tirets si le conducteur a le pied levé, la temporisation variant alors en fonction de la vitesse du véhicule entre $F_1$ et $F_2$ au moment de la commande manuelle du passage. On notera que la durée $\Delta t_2$ est en pratique très faible et de l'ordre de 20 millisecondes.

La fig. 11 montre le schéma synoptique d'un autre mode de réalisation d'un circuit électronique réalisant les fonctions du schéma de la fig. 3. Dans ce mode de réalisation, le signal E est obtenu par le générateur de rampe 64 recevant les signaux d'entrée A et B et le comparateur de tension 65 à seuil fixe $U_4$. Ces deux éléments réalisent la combinaison logique des signaux d'entrée A et B et assurent la fonction de temporisation $\Delta t_1$ comme le faisaient le générateur de rampe 5 et le comparateur 6 de la fig. 5.

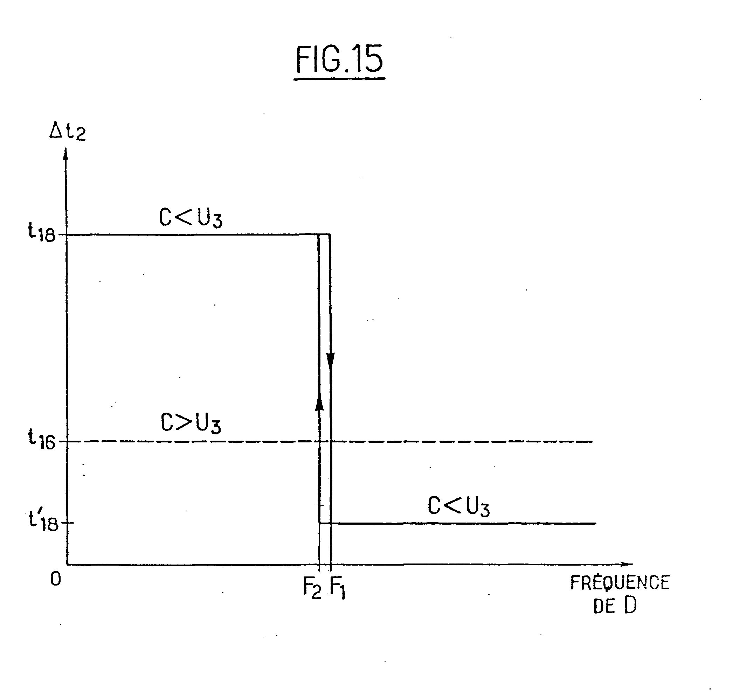

Le signal F est obtenu par le générateur de rampe 66 recevant les signaux d'entrée A et B et par le comparateur de tension à seuil contrôlé 67 recevant le signal de sortie du générateur de rampe 66, la tension de seuil fixe $U_5$ modifiée par la commande de seuil provenant du comparateur de tension 68 à seuil fixe $U_3$ qui tient compte du niveau du signal C et par la commande de seuil qui provient du comparateur de fréquence à seuil fixe 69 tenant compte de la fréquence du signal D. Cette disposition permet de réaliser la combinaison logique des signaux d'entrée A et B et une temporisation $\Delta t_2$ donnant trois valeurs de temps suivant le niveau de tehsion du signal C et la fréquence du signal D comme on peut le voir sur la fig. 15. Au lieu d'obtenir dans ces conditions une variation continue de la temporisation $\Delta t_2$ comme sur la courbe de la fig. 10 on se contente ici d'une approximation qui permet en contrepartie de simplifier le circuit électronique.

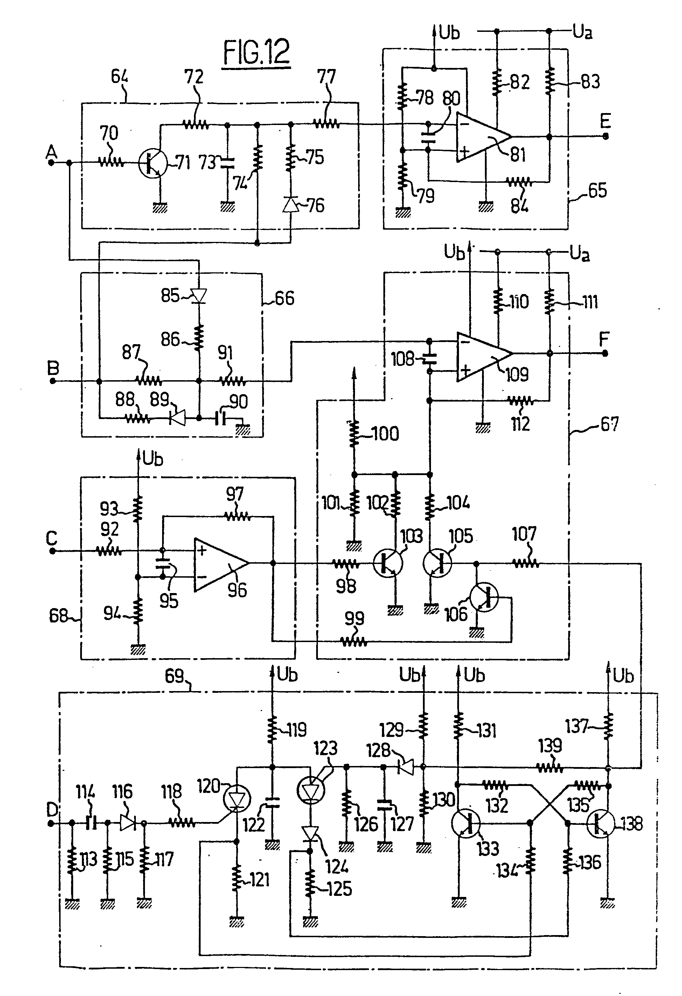

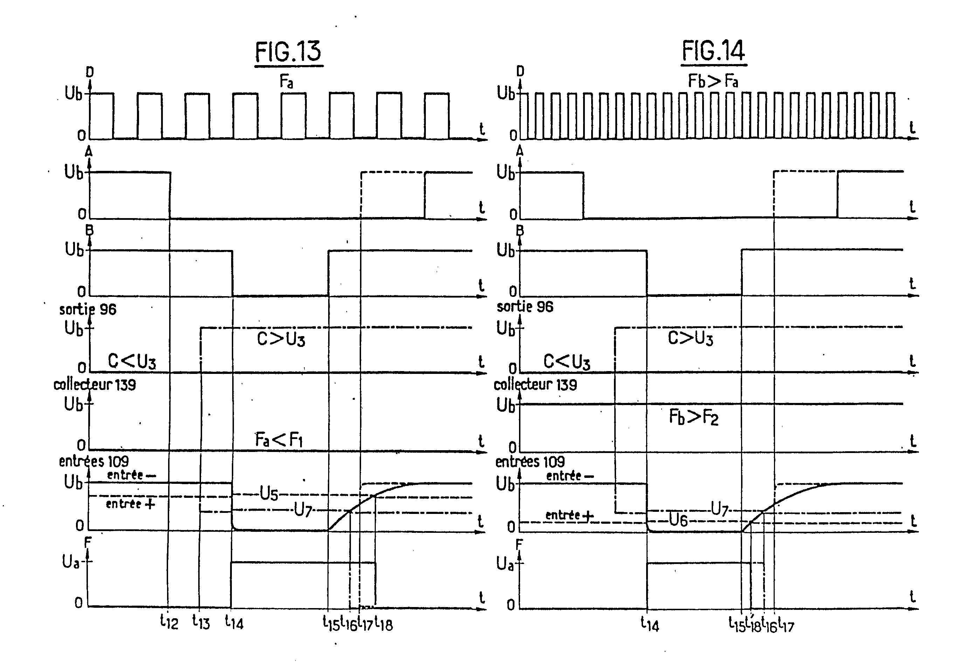

La fig. 12 représente à titre d'exemple le schéma détaillé d'un circuit électronique pouvant être utilisé pour réaliser les fonctions de la fig. 11 et qui va être décrit au moyen des diagrammes des formes d'onde des fig. 13 et 14.

On notera tout d'abord due le générateur de rampe 64 et le comparateur de tension 65 sont réalisés à l'aide des éléments électroniques 70 à 84 qui remplissent les mêmes fonctions que les éléments électroniques 11 à 25 du générateur de rampe 5 et du comparateur de tension à seuil fixe 6 illustrés sur la fig. 6.

La générateur de rampe 66 de la fig. 11 est réalisé au moyen du condensateur 90 qui peut se charger ou se décharger suivant des lois exponentielles à différentes constantes de temps par les voies suivantes:

— la première voie comprend une résistance 86 et une diode 85 disposées en série et connectées au signal A qui permet de charger rapidement le condensateur 90 lorsque le signal A est haut ($U_b$) et de le maintenir chargé tant que le signal A reste haut. Cette configuration se retrouve sur la fig. 13 pour les temps inférieurs à $t_{12}$ et les temps supérieurs à $t_{17}$. Cette voie est sans influence sur l'état de charge du condensateur 90 lorsque le signal A est bas.

Une deuxième voie est constituée par une résistance 87 placée en parallèle avec la branche constituée de la résistance 88 en série avec la diode 89. Cette voie connectée au signal B permet de décharger rapidement le condensateur 90 par la branche comprenant la résistance 88 et la diode 89 lorsque le signal B devient bas et de le maintenir déchargé tant que le signal B reste bas. Cette configuration apparaît sur la fig. 13 pour les temps compris entre $t_{14}$ et $t_{15}$. Cette voie permet également de charger lentement le condensateur 90 par la résistance 87 lorsque le signal B devient haut ($U_b$) et de le maintenir chargé tant que le signal B reste haut. Cette configuration intervient sur la fig. 13 pour les temps supérieurs à $t_{15}$.

Le comparateur de tension à seuil fixe 68 est réalisé à l'aide des éléments électroniques 92 à 97 qui remplissent les mêmes fonctions que les éléments 43 à 48 du comparateur de tension à seuil fixe 9 de la fig. 6. On rappelera que le signal de sortie de l'amplificateur 96 est haut ($U_b$) lorsque le niveau de signal C est supérieur

au seuil fixé $U_3$ comme représenté sur la fig. 13 pour en temps supérieurs à $t_{13}$ et bas dans le cas contraire comme représenté sur la fig. 13 pour les temps inférieurs à $t_{13}$.

Le comparateur de fréquence à seuil fixe 69 dans le mode de réalisation non limitatif de la fig. 12 est constitué par les éléments électroniques 113 à 139. Ce dispositif a déjà fait l'objet d'une description dans le brevet français 2.268.268 ayant pour titre "Circuit tachymétrique à plusieurs états" auquel on pourra se référer pour plus de précision. Ce dispositif est basé sur la comparaison de la durée de référence d'un signal généré par le circuit et la durée de la période du signal à observer.

Le comparateur de durée est constitué par le condensateur 122 qui se charge lentement par l'intermédiaire de la résistance 119 reliée à la tension $U_b$. Le condensateur 122 peut se décharger rapidement par deux voies différentes:

— la première voie est constituée par le thyristor 120 qui décharge impérativement le condensateur 122 à travers la résistance 121 à chaque période du signal D lorsque le circuit dériveur positif constitué par les éléments 113 à 117 envoie une impulsion positive de courte durée sur la gâchette du thyristor 120 à travers la résistance 118;
— la deuxième voie est constituée par le transistor unijonction 123 qui décharge le condensateur 122 à travers la diode 124 et la résistance 125 chaque fois que la tension de charge du condensateur 122 atteint la tension d'amorçage du transistor unijonction 123 définie par le valeur du diviseur potentiométrique constitué par les résistances 126, 129, 130, 137 et 139, le transistor NPN 138 et la diode 128 qui assure la compensation en température du seuil d'amorçage. La valeur de la résistance 119 est choisie de façon que la valeur du courant qui la traverse soit comprise entre le fort courant de maintien du thyristor 120 et le faible courant de maintien du transistor unijonction 123. De cette manière, le transistor unijonction 123 reste conducteur après son amorçage en empêchant le condensateur 122 de se recharger jusqu'à ce que le thyristor 120, en s'amorçant, lui dérive un courant suffisant pour provoquer successivement le blocage du transistor unijonction 123 puis du thyristor 120. Le condensateur 122 peut alors se recharger librement sous la tension $U_b$ à travers la résistance 119.

Suivant que la période du signal d'entrée D est supérieure ou inférieure à la durée du signal de référence, une impulsion positive, courte et de forte valeur apparaît sur l'une ou l'autre des résistances 121 et 125 et est envoyée sur l'une ou l'autre des voies de commande d'une bascule bistable qui garde en mémoire le résultat jusqu'à la période suivante. Cette bascule est constituée par deux transistors NPN 133 et 138 et des résistances 131, 132, 134, 135, 136 et 137. Le branchement de la bascule est tel que le transistor 138 soit saturé et la transistor 133 bloqué lorsque la période du signal D est supérieure à la durée du signal de référence c'est-à-dire pour une fréquence inférieure au seuil fixé. Au contraire, le transistor 138 est bloqué et le transistor 133 est saturé lorsque la période du signal D est inférieure à la durée du signal de référence c'est-à-dire pour une fréquence supérieure au seuil fixé. L'hystérésis en fréquence nécessaire à la bonne stabilité du montage est assurée par la résistance 139 qui est montée sur le diviseur potentiométrique constitué par les résistances 129 et 130 et intervient suivant l'état de la bascule. Le seuil d'amorçage du transistor unijonction 123 voit sa valeur augmenter lorsque la fréquence du signal D croissante atteint le seuil F1 (voir fig. 15) ce qui a pour conséquence d'augmenter la durée du signal de référence faisant descendre à la valeur F2, inférieure à F1, le seuil en fréquence décroissante du signal D.

Le comparateur de tension à seuil contrôlé 67 est constitué par l'amplificateur opérationnel 109 qui pour les mêmes raisons que précédemment est du même type et monté de la même manière que les amplificateurs 22 et 60 de la fig. 6. Il reçoit sur son entrée (—) à travers la résistance 91 la tension de charge du condensateur 90 qui évolue en fonction du temps suivant les niveaux des entrées A et B.

L'entrée (+) de l'amplificateur 109 est reliée à un diviseur potentiométrique constitué par les résistances 100 à 104 et les transistors NPN 103 et 105 et à une résistance de réaction 112 dont l'autre extrémité est connectée à la sortie de l'amplificateur opérationnel 109 qui fournit le signal F. Cette disposition permet d'appliquer à l'entrée (+) de l'amplificateur 109 une tension de référence qui peut prendre pulsieurs valeurs suivant l'état bloqué on saturé des deux transistors 103 et 105. Cette tension de référence varie légèrement dans le même sens que la tension de sortie en produisant un décalage de la tension à l'entrée (+) qui favorise son croisement avec la tension envoyée à l'entrée (—) au point de comparaison pour obtenir un signal F qui possède des fronts de montée et de descente raides dépourvus d'oscillation parasite.

Le transistor 103 est bloqué lorsque le signal de sortie de l'amplificateur 96, relié par l'intermédiaire de la résistance 98 à la base du transistor 103, est bas c'est-à-dire lorsque le niveau du signal C est inférieur au seuil $U_3$. Le transistor 103 est au contraire saturé lorsque le signal de sortie de l'amplificateur 96 est haut ($U_b$) c'est-à-dire lorsque le signal C est supérieur au seuil $U_3$.

Le transistor 105 est bloqué lorsque le transistor NPN 106 qui est placé entre la base et l'émetteur du transistor 105 est saturé c'est-à-dire quand le signal de sortie de l'amplificateur 96 relié par l'intermédiaire de la résistance 99 à la base du transistor 106 est haut ($U_b$) ce qui signifie que le signal C est supérieur au seuil $U_3$. Dans le cas contraire, la sortie de l'amplificateur 96 étant au niveau bas et le signal C inférieur au seuil $U_3$, le transistor 106 est bloqué et sa présence est sans influence sur l'état de conduction du transistor 105 qui se trouve bloqué lorsque le signal qui vient du comparateur de fréquence sur le collecteur du transistor 138 relié par l'intermédiaire de la résistance 107 à la base du transistor 105 est au niveau bas, c'est-à-dire lorsque la fréquence du signal D est inférieure au seuil de fréquence fixé à $F_1$. Le transistor 105 est au contraire saturé lorsque le signal de sortie du comparateur de fréquence est haut ($U_b$) c'est-à-dire lorsque la fréquence du signal D est supérieure au seuil de fréquence fixé à $F_2$ et lorsque le transistor 106 est bloqué.

Le seuil de référence de l'amplificateur 109 le plus haut $U_5$ est obtenu lorsque les deux transistors 103 et 105 sont bloqués c'est-à-dire quand le signal C est inférieur au seuil $U_3$ et quand la fréquence du signal D est inférieure au seuil $F_1$. La tension de charge du condensateur 90 atteint alors le seuil haut $U_5$ à l'instant $t_{18}$ de la fig. 13.

Le seuil de référence de l'amplificateur 109 le plus bas $U_6$ est obtenu lorsque le transistor 103 est bloqué et lorsque le transistor 105 est saturé c'est-à-dire quand le signal C est inférieur au seuil $U_3$ et quand la fréquence du signal D est supérieure au seuil $F_2$. La tension de charge du condensateur 90 atteint alors le seuil bas $U_6$ à l'instant $t'_{18}$ de la fig. 14.

Le seuil de référence de l'amplificateur 109 prend la valeur intermédiaire $U_7$ lorsque le transistor 103 est saturé et que le transistor 105 est bloqué c'est-à-dire quand le signal C est supérieur au seuil $U_3$ quelle que soit la fréquence du signal D. La tension de charge du condensateur 90 atteint alors le seuil intermédiaire $U_7$ à l'instant $t_{16}$ des fig. 13 et 14.

On pourra se reporter aux fig. 13 et 14 pour mieux comprendre le fonctionnement du montage précédent pour deux valeurs Fa et Fb de la fréquence du signal D. On voit sur ces figures que la durée du niveau haut ($U_a$) qui correspond à la temporisation $\Delta t_2$ est comptée à partir du temps $t_{15}$ jusqu'aux temps $t_{16}$, $t_{18}$ ou $t'_{18}$ selon la valeur des signaux C et D. On notera comme précédemment que dans le cas représenté en tirets où le signal A revient au niveau haut avant l'expiration complète de cette temporisation, le signal F revient immédiatement au niveau bas au temps référence $t_{17}$.

Lorsque le conducteur du véhicule appuie sur l'accélérateur la temporisation est $t_{18}$ ou $t'_{18}$ selon la vitesse du véhicule (fig. 15). Dans le cas où le conducteur a le pied levé la temporisation est au contraire $t_{16}$.

Finalement, on voit que l'on obtient grâce au dispositif de commutation séquentielle de l'invention un signal de commande F de la deuxième électrovanne EL2 qui est la combinaison des signaux A et B représentant les seuils de passage des vitesses en fonction des signaux C et D qui représentent respectivement la position de la pédale d'accélérateur et la vitesse du véhicule. On obtient ainsi une durée variable pour le passage transitoire entre les troisième et deuxième rapports de la transmission.

## Revendications

1. Dispositif de commutation séquentielle de deux électrovannes EL1, EL2 pilotant un dispositif de commande hydraulique (H) d'une transmission automatique à trois rapports de marche avant, à passage sous couple et une marche arrière, à partir de signaux dépendant de la marche du véhicule équipé de la transmission et en particulier de deux signaux (A, B) correspondants respectivement au seuil de passage du premier au deuxième rapport de marche avant et au seuil de passage du deuxième au troisième rapport de marche avant, d'un signal (C) fonction de la position de la pédale d'accélérateur et d'un signal de fréquence (D) fonction de la vitesse du véhicule, caractérisé par le fait qu'il comprend un premier block de traitement (1) des deux signaux (A, B) de seuil de passage des rapports fournissant un premier signal de commande (E) pour la première électrovanne ($EL_1$) avec une temporisation constante ($\Delta t_1$) et un deuxième bloc de traitement (2) des deux signaux (A, B) de seuil de passage des rapports, recevant le signal (C) fonction de la position de la pédale d'accélérateur et le signal de fréquence (D) fonction de la vitesse du véhicule et fournissant un deuxième signal de commande (F) pour la deuxième électrovanne ($EL_2$) avec une temporisation variable ($\Delta t_2$) dont la durée dépend des signaux (C) et (D).

2. Dispositif de commutation séquentielle suivant la revendication 1, caractérisé par le fait que le premier bloc de traitement (1) comprend un générateur de rampe (5) recevant les signaux de seuil de passage (A, B) connecté à un comparateur de seuil à tension fixe (6) définissant le premier signal de commande (E).

3. Dispositif de commutation selon la revendication 2, caractérisé par le fait que le générateur de rampe (5) comprend un condensateur (14) pouvant se charger et se décharger par une première voie reliée au premier signal de seuil de passage (A) comprenant un transistor NPN (12) recevant ledit signal sur sa base de façon à permettre une décharge rapide quand le signal (A) est au niveau haut et le maintien de l'état déchargé du condensateur (14) tant que le signal (A) reste à ce niveau haut, cette première voie n'ayant pas d'effet lorsque le signal (A) est au niveau bas; et une deuxième voie reliée au deuxième signal de seuil de passage (B) comprenant une résistance (15) montée en parallèle avec l'association un série d'une résistance (16) et d'une diode (17) permettant une charge rapide du condensateur (14) quand le signal (B) est au niveau haut et le maintien chargé du condensateur (14) tant que le signal (B) reste au niveau haut, le signal précédent (A) étant au niveau bas, ladite deuxième voie permettant en outre une décharge lente du condensateur (14) lorsque le signal (B) est au niveau bas et son maintien à l'état déchargé en supprimant l'effet de la première voie.

4. Dispositif de commutation selon les revendications 2 ou 3, caractérisé par le fait que le comparateur de tension à seuil fixe (6) comprend un amplificateur opérationnel (22) alimenté par une tension $(U_a)$ différente de la tension de niveau haut $(U_b)$ des autres signaux, l'entrée négative dudit amplificateur étant reliée à la sortie du générateur de rampe (5) et l'entrée positive reliée à une tension de référence et à une résistance de réaction (25).

5. Dispositif de commutation selon la revendication 1, caractérisé par le fait que le deuxième bloc de traitement (2) comprend un générateur de rampe linéaire (7) qui reçoit le signal complémentaire (B̄) du deuxième signal de seuil de passage et un signal provenant d'un comparateur de tension à seuil fixe (9) alimenté par le signal (C) fonction de la position de la pédale d'accélérateur de façon à définir la pente de la rampe générée.

6. Dispositif de commutation selon la revendication 5, caractérisé par le fait que le générateur de rampe linéaire (7) comprend un condensateur (35) pouvant se charger et se décharger selon différentes constantes de temps par: une première voie comportant une résistance (31) en série avec un transistor NPN (30) assurant une décharge rapide du condensateur (35) lorsque le complément (B̄) du deuxième signal de seuil de passage est au niveau haut ainsi que le maintien déchargé du condensateur (35) tant que ledit complément de signal (B̄) se maintient à ce niveau, cette première voie étant sans influence sur l'état de charge du condensateur (35) lorsque ledit complément de signal (B̄) est au niveau bas; et une deuxième voie comportant un amplificateur opérationnel (38) muni d'une boucle de réaction et d'une boucle de contre-réaction afin de charge le condensateur (35) à courant constant en fonction du résultat d'une comparaison du signal (C) fonction de la position de la pédale d'accélérateur avec une tension de référence $(U_2)$.

7. Dispositif de commutation selon les revendications 5 ou 6, caractérisé par le fait que le deuxième bloc de traitement (2) comprend en outre un comparateur de tension à seuil variable (8) muni d'une boucle de réaction et recevant sur son entrée positive une tension image de la fréquence du signal de fréquence (D) fonction de la vitesse du véhicule et sur son entrée négative le signal de sortie du générateur de rampe linéaire (7), et les deux signaux de seuil de passage (A, B).

8. Dispositif de commutation séquentielle selon la revendication 1, caractérisé par le fait que le deuxième bloc de traitement (2) comprend un générateur de rampe (66) recevant les deux signaux de seuil de passage (A, B).

9. Dispositif de commutation selon la revendication 8, caractérisé par le fait que le générateur de rampe (66) comprend un condensateur (90) pouvant se charger et se décharger par: une première voie constituée par une résistance (86) et une diode (85) reliées au premier signal de seuil (A) afin d'assurer une charge rapide du condensateur (90) quand le signal (A) est au niveau haut, ladite première voie étant sans effet sur le condensateur (90) lorsque le signal (A) est au niveau bas; et une deuxième voie constituée par une résistance (87) montée en parallèle avec l'association en série d'une résistance (88) et d'une diode (89) reliée au deuxième signal de seuil de passage (B) afin d'assurer une décharge rapide du condensateur (90) lorsque le signal (B) est au niveau bas et une charge lente lorsque ledit signal (B) passe au niveau haut.

10. Dispositif de commutation selon les revendications 8 ou 9, caractérisé par le fait qu'il comprend en outre un comparateur de fréquence à seuil fixe (69) recevant le signal de fréquence (D) fonction de la vitesse du véhicule et comprenant un comparateur de la durée de référence d'un signal généré par le circuit avec la durée de la période du signal d'entrée (D) qui envoie un signal à l'une ou l'autre des entrées d'une bascule bistable qui garde en mémoire le résultat jusqu'à la période suivante.

11. Dispositif de commutation selon l'une quelconque des revendications 8 à 10, caractérisé par le fait que le deuxième bloc de traitement (2) comprend un comparateur de tension à seuil contrôlé (67) recevant le signal de sortie du générateur de rampe (66) ainsi que les signaux de sortie du comparateur de tension à seuil fixe (68) traitant le signal (C) fonction de la position de la pédale d'accélérateur et le signal de sortie du comparateur de fréquence à seuil fixe (69) traitant le signal de fréquence (D) fonction de la vitesse du véhicule.

12. Dispositif de commutation selon la revendication 11, caractérisé par le fait que le comparateur de tension à seuil contrôlé (67) comprend un amplificateur opérationnel (109) et trois transistors (103, 105 et 106) commandés respectivement par le signal de sortie du comparateur de tension à seuil fixe (68) traitant le signal (C) fonction de la position de la pédale d'accélérateur et la sortie du comparateur de fréquence à seuil fixe (69) traitant le signal de fréquence (D) fonction de la vitesse du véhicule.

## Patentansprüche

1. Vorrichtung zur Folgeschaltung von zwei Magnetventilen (EL1, EL2), die eine hydraulische Betätigungsvorrichtung (H) eines Automatikgetriebes mit drei Vorwärtsgängen mit Dreschaltung und einem Rückwärtsgang mit Hilfe von Signalen steuert, die von der Fahrt des Fahrzeugs abhängen, das mit dem Getriebe ausgerüstet ist, und insbesondere von zwei Signalen (A, B), die dem Übergangs-Schwellenwert vom ersten in den zweiten Vorwärtsgang bzw. dem Übergangs-Schwellenwert vom zweiten in den dritten Vorwärtsgang entsprechen, sowie von einem Signal (C) in Abhängigkeit von der Stellung des Gaspedals und von einem Frequenzsignal (D) in Abhängigkeit von der Geschwindigkeit des Fahrzeugs abhängen, dadurch gekennzeichnet, daß sie enthält: einen ersten Block (1) zur Verarbeitung der beiden Signale (A, B) entsprechend dem Übergang von einem Gang zum anderen, der ein erstes, Steuersignal (E) für das erste Magnetventil (EL$_1$) mit einer konstanten Schaltverzögerung ($\Delta t_1$) liefert, sowie einen zweiten Block (2) zur Verarbeitung der beiden Signale (A, B) entsprechend dem Übergangsschwellen von einem Gang zum anderen, der das Signal (C) in Abhängigkeit von der Stellung des Gaspedals und das Frequenzsignal (D) in Abhängigkeit von der Geschwindigkeit des Fahrzeugs aufnimmt und ein zweites Steuersignal (F) für das zweite Magnetventil (EL$_2$) mit einer variablen Verzögerungszeit ($\Delta t_2$) deren Länge von den Signalen (C) und (D) abhängt, liefert.

2. Vorrichtung zur Folgeschaltung gemäß Anspruch 1, dadurch gekennzeichnet, daß der erste Signalverarbeitungsblock (1) einen Sägezahngenerator (5) enthält, der die Übergangsschwellenwertsignale (A, B) aufnimmt, verbunden mit einem Spannungsschwellenwertvergleicher mit fester Spannung (6), der das erste Steuersignal (E) definiert.

3. Vorrichtung zur Folgeschaltung gemäß Anspruch 2, dadurch gekennzeichnet, daß der Sägezahngenerator (5) einen Kondensator (14) enthält, der sich aufladen und entladen kann über einen ersten Strompfad, der mit dem ersten Übergangsschwellenwertsignal (A) verbunden ist und einen npn Transistor (12) enthält, an dessen Basis das genannte Signal liegt um eine schnelle Entladung zu ermöglichen, wenn das Signal (A) hoch liegt sowie den entladenen Zustand des Kondensators (14) beizubehalten solange das Signal (A) hoch bleibt, wobei dieser erste Strompfad unwirksam wird sobald das Signal (A) niedrig leigt; und einen zweiten Strompfad, der mit dem zweiten Übergangsschwellenwertsignal (B) verbunden ist und einen Widerstand (15) enthält, der zu einer Reihenschaltung eines Widerstands (16) und einer Diode (17) parallel liegt und eine schnelle Ladung des Kondensators (14) ermöglicht, wenn das Signal (B) hoch liegt und den geladenen Zustand des Kondensators (14) beibehält solange das Signal (B) hoch bleibt, während das obige Signal (A) niedrig liegt und wobei dieser zweite Pfad ferner eine langsame Entladung des Kondensators (14) wenn das Signal (B) diedrig liegt, und die Beibehaltung seines entladenen Zustands durch Unterdrückung der Wirkung des ersten Strompfads ermöglicht.

4. Schaltvorrichtung gemäß den Ansprüchen 2 oder 3, dadurch gekennzeichnet, daß der Spannungsvergleicher mit festem Schwellenwert (6) einen Operationsverstärker (22) enthält, der von einer Spannung (U$_a$) gespeist wird die sich von der hochliegenden Spannung (U$_b$) der anderen Signale unterscheidet, wobei der negative Eingang des genannten Operationsverstärkers am Ausgang des Sägezahngenerators (5) und der positive Eingang au einer Referenzspannung und an einem Rückkopplungswiderstand (25) liegt.

5. Schaltvorrichtung gemäß Anspruch 1, dadurch gekennzeichnet, daß der zweite Signalverarbeitungsblock (2) einen linearen Sägezahngenerator (7) enthält, der das Komplementärsignal ($\overline{B}$) des zweiten Übergangsschwellenwertsignals und ein Signal aus einem Spannungsvergleicher mit festem Schwellenwert (9) aufnimmt, der von dem Signal (C) in Abhängigkeit von der Stellung des Gaspedals gespeist wird, so daß er die Steilheit des generierten Sägezahns definiert.

6. Schaltvorrichtung gemäß Anspruch 5, dadurch gekennzeichnet, daß der lineare Sägezahngenerator (7) einen Kondensator (35) enthält, der sich nach unterschiedlichen Zeitkonstanten aufladen und entladen kann über einen ersten Strompfad, der einen Widerstand (31) in Reihe mit einem npn Transistor (30) enthält und eine schnelle Entladung des Kondensators (35) gewährleistet wenn das Komplementärsignal ($\overline{B}$) des zweiten Übergangsschwellenwertsignals hoch liegt sowie den entladenen Zustand des Kondensators (35) beibehält solange das Komplementärsignal ($\overline{B}$) niedrig liegt, wobei dieser erste Strompfad ohne Einfluß auf den Ladungszustand des Kondensators (35) bleibt wenn das Komplementärsignal ($\overline{B}$) niedrig liegt; und einen zweiten Strompfad, der einen Operations-verstärker (38) versehen mit einer Rückkopplungsschleife und einer Gegenkopplungsschleife enthält, um den Kondensator (35) mit konstantem Strom in Abhängigkeit vom Ergebnis eines Vergleichs zwischen dem Signal (C) in Abhängigkeit von der Stellung des Gaspedals und einer Referenzspannung (U$_2$) zu laden.

7. Schaltvorrichtung gemäß den Ansprüchen 5 oder 6, dadurch gekennzeichnet, daß der zweite Signalverarbeitungsblock (2) ferner einen Spannungsvergleicher mit variablem Schwellenwert (8) enthält, der mit einer Rückkopplungsschleife versehen ist und an dessen positivem Eingang eine Spannung liegt, die ein Abbild der Frequenz des Frequenz-

## 23

signals (D) in Abhängigkeit von der Geschwindigkeit des Fahrzeugs ist, und an dessen negativem Eingang das Ausgangssignal des linearen Sägezahngenerators (7) und die beiden Übergangsschwellenwertsignale (A, B) eingespeist werden.

8. Vorrichtung zur Folgeschaltung gemäß Anspruch 1, dadurch gekennzeichnet, daß der zweite Signalverarbeitungsblock (2) einen Sägezahngenerator (66) enthält. der die beiden Übergangsschwellenwertsignale (A, B) aufnimmt.

9 Schaltvorrichtung gemäß Anspruch 8, dadurch gekennzeichnet daß der Sägezahngenerator (66) einen Kondensator (90) enthält, der sich lädt und entlädt über einen ersten Strompfad, der aus einem Widerstand (86) und einer Diode (85) besteht, die mit dem ersten Schwellenwertsignal (A) verbunden sind um eine schnelle Entladung des Kondensators (90) zu gewährleisten sobald das Signal (A) hoch liegt, wobei dieser erste Strompfad ohne Einwirkung auf den Kondensator (90) bleibt wenn das Signal (A) niedrig liegt, und einen zweiten Strompfad bestehend aus einem Widerstand (87), der zu einer Reihenschaltung aus einem Widerstand (88) und einer Diode (89) parallel liegt, enthält, der mit dem zweiten Schwellenwertsignal (B) in Verbindung steht um eine schnelle Entladung des Kondensators (90) wenn das Signal (B) niedrig liegt, und eine langsame Aufladung wenn das Signal (B) hoch wird, zu gewährleisten.

10. Schaltvorrichtung gemäß Ansprüchen 8 oder 9, dadurch gekennzeichnet, daß sie ferner einen Frequenzvergleicher mit festem Schwellenwert (69) enthält, der das Frequenzsignal (D) in Abhängigkeit von der Geschwindigkeit des Fahrzeugs aufnimmt und einen Vergleicher zwischen der Referenzdauer eines Signals, das von der Schaltung generiert wird, und der Dauer der Periode des Eingangssignals (D) enthält, der ein Signal an den einen oder den anderen Eingang einer bistabilen Kippschaltung liefert, die das Ergebnis bis zur nachfolgenden Periode speichert.

11. Schaltvorrichtung gemäß einem beliebigen der Ansprüche 8 bis 10, dadurch gekennzeichnet, dáß der zweite Signalverarbeitungsblock (2) einen Spannungsvergleicher mit gesteuertem Schwellenwert (67) enthält, an dem das Ausgangssignal des Ságezahngenerators (66) sowie die Ausgangssignale des Spannungsvergleichers mit festem Schwellenwert (68) liegen, der das Signal (C) in Abhängigkeit von der Stellung des Gaspedals und das Ausgangssignal des Frequenzvergleichers mit festem Schwellenwert (69) und das Frequenzsignal (D) in Abhängigkeit von der Geschwindigkeit des Fahrzeugs verarbeitet.

12. Schaltvorrichtung gemäß Anspruch 11, dadurch gekennzeichnet, daß der Spannungsvergleicher mit gesteuertem Schwellenwert (67) einen Operationsverstärker (109) und drei Transistoren (103, 105, 106) enthält, die vom

## 24

Ausgangssignal des Spannungsvergleichers mit festem Schwellenwert (68), der das Signal (C) in Abhängigkeit von der Stellung des Gaspedals verarbeitet, bzw. vom Ausgang des Frequenzvergleichers mit festem Schwellenwert (69), der das Frequenzsignal (D) in Abhängigkeit von der Geschwindigkeit des Fahrzeuges verarbeitet, gesteuert werden.

**Claims**

1. A device for sequential switching of two electrically operated valves $(EL_1, EL_2)$ controlling a device for hydraulic operation (H) of an automatic transmission with three forward drive ratios, with changeover under torque and one reverse drive, on the basis of signals depending on the running of the vehicle fitted with the transmission and particularly on the basis of two signals (A, B) corresponding respectively to the threshold of the change from the first to the second forward drive ratio and to the threshold of the change from the second to the third forward drive ratio, one signal (C) depending on the position of the accelerator pedal and a frequency signal (D) depending on vehicle speed, characterized in that it comprises a first processing unit (1) for the two ratio change threshold signals (A, B) supplying a first control signal (E) for the first valve $(EL_1)$ with a constant time delay $(\Delta t_1)$, and a second processing unit (2) for the two ratio change threshold signals (A, B) receiving the signal (C) depending on the position of the accelerator pedal and the frequency signal (D) depending on the vehicle speed and supplying a second control signal (F) for the second valve $(EL_2)$ with a variable time delay $(\Delta t_2)$ the duration of which depends on signals (C) and (D).

2. The sequential switching device according to claim 1, characterized in that the first processing unit (1) comprises a sawtooth generator (5) receiving the change threshold signals (A, B) connected to a fixed voltage threshold comparator (6) defining the first control signal (E).

3. The switching device according to claim 1, characterized in that the sawtooth generator (5) comprises a capacitor (14) able to be charged and discharged through a first route connected to the first change threshold signal (A) comprising an NPN transistor (12) receiving this signal on its base, so as to permit rapid discharge when the signal (A) is at the high level and the discharged condition of the capacitor (14) to be maintained so long as the signal (A) remains at this high level, this first route not having any effect when the signal (A) is at the low level; and a second route connected to the second change threshold signal (B) comprising a resistor (15) mounted in parallel with the series combination of a resistor (16) and a diode (17) permitting rapid charging of the capacitor (14) when the signal (B) is at the high level and the capacitor (14) to remain charged so long as the signal (B) remains at the high level, with the preceding signal (A) being at the low level; the said second route also allowing slow discharge of the capacitor (14) when the signal (B) is at the low level and allowing it to be kept in the discharged condition by removing the effect of the first route.

4. The switching device according to claims 2 or 3, characterized in that the fixed threshold voltage comparator (6) comprises an operational amplifier (22) fed by a voltage ($U_a$) differing from the high level voltage ($U_b$) of the other signals, with the negative input of the said amplifier being connected to the output of the sawtooth generator (5) and the positive input connected to a reference voltage and a feedback resistor (25).

5. The switching device according to claim 1, characterized in that the second processing unit (2) comprises a linear sawtooth generator (7) which receives the complementary signal ($\overline{B}$) of the second change threshold signal and a signal coming from a fixed threshold voltage comparator (9) fed by the signal (C) depending on the position of the accelerator pedal in such a way as to define the slope of the generated sawtooth wave.

6. The switching device according to claim 5, characterized in that the linear sawtooth generator (7) comprises a capacitor (35) which can be charged and discharged according to different time constants via: a first route comprising a resistor (31) in series with an NPN transistor (30) providing a fast discharge of the capacitor (35) when the complement ($\overline{B}$) of the second change threshold signal is at the high level and also keeping the capacitor (35) discharged so long as the said complement of signal ($\overline{B}$) keeps at this level, this first route having no effect on the charge condition of the capacitor (35) when the said signal complement ($\overline{B}$) is at the low level; and a second route comprising an operational amplifier (38) provided with a feedback loop and a negative feedback loop in order to charge the capacitor (35) at constant current in accordance with the result of a comparison between the signal (C) which depends on the position of the accelerator pedal and a reference voltage ($U_2$).

7. The switching device according to claims 5 or 6, characterized in that the second processing unit (2) additionally comprises a variable threshold voltage comparator (8) provided with a feedback loop and receiving at its positive input a voltage that is the image of the frequency of the frequency signal (D) which is a function of the vehicle speed and at its negative input the output signal from the linear sawtooth generator (7), and the two change threshold signals (A, B).

8. The sequential switching device according to claim 1, characterized in that the second processing unit (2) comprises a sawtooth generator receiving both change threshold signals (A, B).

9. The switching device according to claim 8, characterized in that the sawtooth generator (66) comprises a capacitor (9) that can be charged and discharged via: a first route consisting of a resistor (86) and a diode (85) connected to the first threshold signal (A) in order to ensure rapid charging of the capacitor (90) when the signal (A) is at the high level, the said first route having no effect on the capacitor (90) when the signal (A) is at the low level; and a second route consisting of a resistor (86) mounted in parallel with the series combination of a resistor (88) and a diode (89) connected to the second change threshold signal (B) in order to ensure rapid discharge of the capacitor (90) when the signal (B) is at the low level and slow charging when the said signal (B) goes over to the high level.

10. The switching device according to claims 8 or 9, characterized in that it also comprises a fixed threshold frequency comparator (69) receiving the frequency signal (D) depending on the vehicle speed and comprising a comparator comparing the reference duration of a signal generated by the circuit with the duration of the period of the input signal (D) which sends a signal to either of the inputs of a bistable multivibrator which keeps the result stored until the next period.

11. The switching device according to any of claims 8 to 10, characterized in that the second processing unit (2) comprises a controlled threshold voltage comparator (67) receiving the output signal from the sawtooth generator (66) along with the output signals from the fixed threshold voltage comparator (68) processing the signal (C) which depends on the position of the accelerator pedal and the output signal from the fixed threshold frequency comparator (69) processing the frequency signal (D) which depends on the vehicle speed.

12. The switching device according to claim 11, characterized in that the controlled threshold voltage comparator (67) comprises an operational amplifier (109) and three transistors (103, 105 and 106) controlled respectively by the output signal from the fixed threshold voltage comparator (68) processing the signal (C) which depends on the position of the accelerator pedal and the output from the fixed threshold frequency comparator (69) processing the frequency signal (D) which depends on the vehicle speed.

FIG.1

FIG.2

| LEVIER SELECTION | ETATS PERMANENTS | | | | | | | | | ETATS TRANSITOIRES | |
|---|---|---|---|---|---|---|---|---|---|---|---|
| | P | R | N | A | | | 2 | | 1 | A | |
| RAPPORT ENGAGE | 0 | AR | 0 | 1 | 2 | 3 | 1 | 2 | 1 | 2↗3 | 3↘2 |
| $EL_1$ | 0 | 0 | 0 | 0 | L | 0 | 0 | L | 0 | L | L |
| $EL_2$ | L | L | L | L | L | 0 | L | L | L | 0 | 0 |
| $E_1$ | 0 | 0 | 0 | L | L | L | L | L | L | L | L |
| $E_2$ | 0 | L | 0 | 0 | 0 | L | 0 | 0 | 0 | 0 | 0 |
| $F_1$ | 0 | L | 0 | 0 | 0 | 0 | 0 | 0 | L | 0 | 0 |
| $F_2$ | 0 | 0 | 0 | 0 | L | 0 | 0 | L | 0 | L | 0→L |

0009 759

FIG.3

FIG.4

FIG.5

FIG.7

FIG.6

FIG.8

$F_a$.

FIG.9

$F_b > F_a$

0 009 759

$\Delta t_2$

## FIG.10

$T_1$

$C < U_2$

$T_2$

$C > U_2$

0    $F_1$    $F_2$    FRÉQUENCE DE D

## FIG.11

A

64

65

E

$U_4$

B

66

67

F

$U_3$

68

C

$U_5$

D

69

7

**0 009 759**

**FIG.12**

8

FIG.13

$F_a$

FIG.14

$F_b > F_a$

sortie 96

$C > U_3$

$C < U_3$

collecteur 139

$F_a < F_1$

entrées 109

entrée —

entrée +

$U_5$

$U_7$

sortie 96

$C > U_3$

$C < U_3$

collecteur 139

$F_b > F_2$

entrées 109

entrée —

entrée +

$U_6$

$U_7$

$t_{12}$ $t_{13}$ $t_{14}$ $t_{15}t_{16}t_{17}t_{18}$

$t_{14}$ $t_{15}t_{18}t_{16}t_{17}$

0 009 759

# FIG.15